# EUROPÄISCHE PATENTANMELDUNG

(11) **EP 3 926 591 A1**
(43) Veröffentlichungstag der Anmeldung: **22.12.2021**
(21) Anmeldenummer: 20180054.7
(22) Anmeldetag: 15.06.2020
(51) Int. Cl.: G07C 9/28, G07C 9/10

(54) **KONFIGURATION VON AUTOMATIKFUNKTIONEN FÜR EINE TÜR**

(71) Anmelder: dormakaba Deutschland GmbH, 58256 Ennepetal (DE)
(72) Erfinder: Hellwig, Alexander, 58256 Ennepetal (DE)
(74) Vertreter: Balder IP Law, S.L.

(57) **Zusammenfassung**

Die Erfindung betrifft ein Verfahren zum individuellen Konfigurieren wenigstens einer Automatikfunktion für eine Tür (10), insbesondere in einem öffentlich zugänglichen Bereich, mit wenigstens einem elektrisch oder elektronisch ansteuerbaren Aktuator (18) zur Durchführung der Automatikfunktion, umfassend die Schritte Empfangen von Konfigurationsinformation von einem einer Person zugeordneten elektronischen Gerät (26) in einem Annäherungsbereich der Tür (10), Konfigurieren der Automatikfunktion basierend auf der empfangenen Konfigurationsinformation, und Ansteuern des Aktuators (18) zur Durchführung der wenigstens einen Automatikfunktion gemäß der Konfiguration. Die Erfindung betrifft außerdem eine Türsteuerungseinrichtung (20) zur elektrischen oder elektronischen Ansteuerung wenigstens eines Aktuators (18) zur Durchführung wenigstens einer Automatikfunktion einer Tür (10), insbesondere in einem öffentlich zugänglichen Bereich.

## Beschreibung

Die vorliegende Erfindung betrifft ein Verfahren zum individuellen Konfigurieren wenigstens einer Automatikfunktion für eine Tür, insbesondere in einem öffentlich zugänglichen Bereich, mit wenigstens einem elektrisch oder elektronisch ansteuerbaren Aktuator zur Durchführung der Automatikfunktion.

Die vorliegende Erfindung betrifft außerdem eine Türsteuerungseinrichtung zur elektrischen oder elektronischen Ansteuerung wenigstens eines Aktuators zur Durchführung wenigstens einer Automatikfunktion einer Tür, insbesondere in einem öffentlich zugänglichen Bereich.

Aus dem Stand der Technik sind Türen mit verschiedenartigen Automatikfunktionen bekannt. Diese Automatikfunktionen werden teilweise auch als Komfortfunktionen bezeichnet. Die Automatikfunktionen betreffen beispielsweise eine versenkbare Türschwelle, eine Rampe, oder einen Antrieb der Tür. Diese Automatikfunktionen erleichtern es Person, die Tür zu betätigen und zu passieren. Beispielsweise kann der Antrieb bei einer Annäherung der Person die Tür automatisch öffnen und im Anschluss auch wieder schließen. Türen mit solchen Automatikfunktionen finden in öffentlich zugänglichen Bereichen zunehmend Verwendung, insbesondere um Personen mit körperlichen Einschränkungen ein Passieren der Türen zu erleichtern.

Nachteilig daran ist, dass diese Automatikfunktionen von verschiedenen Personen als nicht hilfreich oder zumindest als eingeschränkt hilfreich empfunden werden, da die Automatikfunktionen für eine möglichst große Anzahl von Personen konfiguriert sind. Daher kann es beispielsweise vorkommen, dass das Öffnen der Tür für einige Personen zu spät erfolgt, während für andere Personen das Schließen der Tür zu schnell erfolgt, während sie noch nicht die Tür passiert haben.

Prinzipiell sind verschiedene Arten von elektronischen Schließsystemen bekannt. Auch ist beispielsweise eine optische Erkennung von Personen bekannt. Dabei werden häufig Konfigurationsdaten von einem Server abgerufen, um Zugang zu gewähren. Dies kann aber insbesondere in öffentlich zugänglichen Bereichen nicht helfen, da der Zugang gerade nicht beschränkt sein soll. Grundidee für öffentlich zugängliche Bereiche ist gerade, dass es jeder Person möglich sein soll, diesen Bereich zu betreten. Eine Personenerkennung durch die Tür oder ein Personenerkennungssystem des öffentlichen Bereichs ist oftmals Fehleranfällig und beispielsweise aus Datenschutzgründen nur schwer zu verwenden.

Es ist daher eine Aufgabe der vorliegenden Erfindung, zumindest einen voranstehend beschriebenen Nachteil zumindest teilweise zu beheben. Insbesondere ist es Aufgabe der vorliegenden Erfindung, eine einfache Konfiguration von Automatikfunktionen von Türen, insbesondere in öffentlich zugänglichen Bereichen, durchzuführen und darüber den Komfort beim Passieren der Türen zu erhöhen.

Die voranstehende Aufgabe wird gelöst durch ein Verfahren mit den Merkmalen des Anspruchs 1. Weitere Merkmale und Details der Erfindung ergeben sich aus den davon abhängigen Unteransprüchen, der Beschreibung und den Zeichnungen.

Die Aufgabe wird insbesondere gelöst durch ein Verfahren zum individuellen Konfigurieren wenigstens einer Automatikfunktion für eine Tür, insbesondere in einem öffentlich zugänglichen Bereich, mit wenigstens einem elektrisch oder elektronisch ansteuerbaren Aktuator zur Durchführung der Automatikfunktion, umfassend die Schritte Empfangen von Konfigurationsinformation von einem einer Person zugeordneten elektronischen Gerät in einem Annäherungsbereich der Tür, Konfigurieren der Automatikfunktion basierend auf der empfangenen Konfigurationsinformation, und Ansteuern des Aktuators zur Durchführung der wenigstens einen Automatikfunktion gemäß der Konfiguration.

Die voranstehende Aufgabe wird außerdem gelöst durch eine Türsteuerungseinrichtung mit den Merkmalen des Anspruchs 13. Weitere Merkmale und Details der Erfindung ergeben sich aus den davon abhängigen Unteransprüchen, der Beschreibung und den Zeichnungen.

Die Aufgabe wird insbesondere auch gelöst durch eine Türsteuerungseinrichtung zur elektrischen oder elektronischen Ansteuerung wenigstens eines Aktuators zur Durchführung wenigstens einer Automatikfunktion einer Tür, insbesondere in einem öffentlich zugänglichen Bereich, mit einer Steuerungseinheit, und einer Empfangseinrichtung zum Empfangen von Konfigurationsinformation von einem einer Person zugeordneten elektronischen Gerät in einem Annäherungsbereich der Tür, wobei die Steuerungseinheit zur Ansteuerung des wenigstens einen elektrisch oder elektronisch ansteuerbaren Aktuators ausgeführt ist, und die Steuerungseinheit ausgeführt ist, eine individuelle Konfiguration der wenigstens einen Automatikfunktion basierend auf der empfangenen Konfigurationsinformation durchzuführen, und den wenigstens einen Aktuator zur Durchführung der Automatikfunktion gemäß der Konfiguration anzusteuern.

Grundidee der vorliegenden Erfindung ist es also, jeweils individuell für jede Person eine Konfiguration der wenigstens einen Automatikfunktion durchzuführen. Dadurch kann eine Anpassung der wenigstens einen Automatikfunktion an die Person durchgeführt werden. Die Anpassung kann über die Konfigurationsinformation von dem der Person zugeordneten elektronischen Gerät für beliebige Automatikfunktionen prinzipiell beliebiger Türen durchgeführt werden, welche die Konfigurationsinformation empfangen und entsprechend verarbeiten können, um die Automatikfunktionen anzupassen.

Die Türsteuerungseinrichtung ist insbesondere zur Durchführung des obigen Verfahrens ausgeführt.

Der Begriff Tür ist dabei entsprechend zu verstehen, dass die Tür einen Zugang zu dem öffentlich zugänglichen Bereich ermöglicht, d.h. auch um den öffentlich zugänglichen Bereich zu verlassen. Die Tür kann somit eine Zarge und einen oder mehrere Türflügel umfassen. Prinzipiell können auch mehrere Einzeltüren umfasst sein, die in räumlicher Nähe angeordnet sind, beispielsweise um einen Zugang zu verschiedenen Toiletten zu ermöglichen. Ferner kann die Tür auch eine Karusselltür oder eine Schiebetür sein

Die Tür ist vorzugsweise eine Eingangstür zu dem öffentlich zugänglichen Bereich, d.h. der öffentlich zugängliche Bereich wird durch die Tür betreten und wieder verlassen.

Die Automatikfunktion kann beispielsweise eine Türbetätigung sein. Der Aktuator kann entsprechend beispielsweise ein Türantrieb zum Öffnen und/oder Schließen der Tür sein, d.h. um allgemein einen Türflügel der Tür zu bewegen. Eine Türbetätigung kann dabei ohne eine Interaktion der Person mit der Tür erfolgen, oder durch eine Interaktion der Person mit der Tür gestartet werden, beispielsweise indem die Person einen leichten Druck auf die geschlossene Tür ausübt, wodurch die Tür einen Öffnungswunsch erkennt und automatisch weiter geöffnet wird.

Der Aktuator bzw. Türantrieb kann insbesondere direkt am oder im Türflügel, an oder in einer Wand, an oder in einer Türzarge oder an oder im Boden angeordnet sein. Bei einem solchen Türantrieb kann es sich insbesondere um einen mechanischen, elektrischen und/oder elektromechanischen und/oder elektrohydraulischen und/oder pneumatischen Türantrieb handeln, wobei der entsprechende Türflügel mittels mechanisch, elektrisch und/oder elektromechanisch und/oder elektrohydraulisch und/oder pneumatisch erzeugter Hilfskraft, geschlossen und/oder geöffnet werden kann. Die Hilfskraft kann hierbei derart bemessen sein, dass die Hilfskraft unterstützend wirkt, das heißt, dass die beim Öffnen und/oder Schließen der Tür eine verringerte Eigenkraft aufwenden muss. Die Hilfskraft kann auch derart bemessen sein, dass die Tür durch die Hilfskraft automatisch geöffnet wird, das heißt, dass von der Person zusätzlich zur Hilfskraft keine Eigenkraft aufgewendet werden muss. Vorzugsweise ist die Hilfskraft einstellbar, insbesondere als Funktion des Öffnungswinkels des jeweiligen Türflügels. Vorzugsweise erfüllen mit Hilfskraft betriebene Türantriebe bei einem Ausfall der Hilfskraft weiterhin die Funktionen eines mechanischen Türantriebs, insbesondere die Funktion des selbsttätigen Schließens oder Öffnens.

Türantriebe können vorzugsweise wenigstens eine Sicherheitseinrichtung aufweisen. Die Sicherheitseinrichtung kann insbesondere die Öffnungskraft und/oder die Öffnungsgeschwindigkeit und/oder die Schließkraft und/oder die Schließgeschwindigkeit begrenzen. Die Sicherheitseinrichtung kann zusätzlich oder alternativ insbesondere den Schwenkbereich des Türflügels überwachen und eine Sicherheitsfunktion auslösen, wenn eine Person oder ein Objekt in den Schwenkbereich des Türflügels gerät. Eine Sicherheitsfunktion kann beispielsweise das Anhalten des Türflügels, eine Verringerung der Geschwindigkeit des Türflügels sein. Auch diese Sicherheitsfunktionen können vorzugsweise konfiguriert werden.

Die Automatikfunktion kann alternativ eine Rampe, eine Türschwelle, eine Auswahl eines Zugangs (barrierefreier Zugang oder "normaler" Zugang), oder eine bedingte Türfreigabe sein. Entsprechend kann der Aktuator ein Antrieb zum Bewegen bzw. Verstellen der Rampe und/oder der Türschwelle sein. Weiter alternativ kann der Aktuator ein Antrieb zum Freigeben und/oder Verriegeln einer einzelnen Tür sein.

Die Türsteuerungseinrichtung kann integral mit der Automatikfunktion ausgeführt sein. Die Türsteuerungseinrichtung kann dann die integrale Automatikfunktion konfigurieren. Zusätzlich kann die Türsteuerungseinrichtung weitere Automatikfunktionen konfigurieren. Alternativ ist die Türsteuerungseinrichtung unabhängig von der Automatikfunktion bereitgestellt, beispielsweise als separate Baugruppe, die der Tür zugeordnet ist.

Die Steuerungseinheit ist eine prinzipiell beliebige Datenverarbeitungseinheit, insbesondere ein Controller, besonders bevorzugt ein Embedded Controller.

Die Empfangseinrichtung dient dem Empfang der Konfigurationsinformation. Vorzugsweise ist die Empfangseinrichtung zur bi-direktionalen Kommunikation mit dem elektronischen Gerät ausgeführt. Die Empfangseinrichtung ist vorzugsweise nach einem Kurzreichweitenfunkstandard ausgeführt, beispielsweise Bluetooth oder Wireless-LAN. Alternativ kann die Empfangseinrichtung als Ultraschallsignalempfangseinrichtung ausgeführt sein.

Die Empfangseinrichtung ist über eine Datenschnittstelle mit der Steuerungseinheit verbunden. Die empfangene Konfigurationsinformation wird von der Empfangseinrichtung über die Datenschnittstelle an die Steuerungseinheit übermittelt.

Die Konfigurationsinformation ist eine der Person zugeordnete Information, die Vorlieben oder besondere Anforderungen an die Automatikfunktion der Tür widergibt, beispielsweise eine Annäherungsgeschwindigkeit, eine Durchquerungszeit, eine Verwendung von Rampen oder ein Absenken einer Schwelle. Die Konfigurationsinformation ist eine allgemeine Information zur Konfiguration prinzipiell beliebiger Türen an prinzipiell beliebigen Orten, d.h. die Automatikfunktion ist nicht an bestimmte Türen gebunden.

Die Konfigurationsinformation bewirkt eine individuelle Konfiguration für die Person, die das elektronische Gerät mitführt. Die Wirkung der individuellen Konfiguration kann für ein einmaliges/mehrmaliges Betätigen des Aktuators zur Durchführung der wenigstens einen Automatikfunktion ausgeführt sein, oder bis die Person den Annäherungsbereich wieder verlässt bzw. sich von der Tür entfernt.

Das der Person zugeordnete elektronische Gerät kann ein Mobiltelefon, ein Tablet Computer, eine Smartwatch oder ein beliebiges anderes Gerät sein, das von der Person üblicherweise mitgeführt wird, und das eine Kommunikation mit der Empfangseinrichtung ermöglicht, so dass die Konfigurationsinformation von dem elektronischen Gerät an die Türsteuerungseinrichtung übertragen werden kann. Die Konfigurationsinformation ist lokal in dem Gerät gespeichert und/oder bereitgestellt. Die Konfigurationsinformation kann vorzugsweise von der Person selbst angepasst werden, indem sie in dem Gerät bearbeitet wird. Dazu kann auf dem der Person zugeordneten elektronischen Gerät eine entsprechende Software beispielsweise als App installiert sein.

Das Konfigurieren der Automatikfunktion basierend auf der empfangenen Konfigurationsinformation umfasst ein Ermitteln und Bereitstellen eines Satzes von Konfigurationsinformation mit einem Satz einzelner Informationswerte, die für die Automatikfunktion verwendbar sind. Es kann somit in einem einfachen Fall die entsprechende empfangene Konfigurationsinformation unmittelbar als Konfiguration übernommen werden. Alternativ kann eine unten im Detail beschriebene Verarbeitung der Konfigurationsinformation durchgeführt werden.

Das Ansteuern des Aktuators zur Durchführung der wenigstens einen Automatikfunktion gemäß der Konfiguration kann ein Übertragen der Konfiguration an den Aktuator umfassen, so dass dieser bei einer Betätigung gemäß der Konfiguration die Automatikfunktion durchführt. In diesem Fall wird beispielsweise der Strom des Aktuators gemäß der Konfiguration gesteuert, d.h. ein Controller der Automatikfunktion betätigt die Automatikfunktion beispielsweise bei einer entsprechenden Auslösung durch einen Sensor. Die Automatikfunktion wird somit autonom durchgeführt.

Zusätzlich kann vorgesehen sein, dass von der Türsteuerungseinrichtung ein Startbefehl an den Aktuator übertragen wird, so dass eine Betätigung der Automatikfunktion erfolgt.

Alternativ kann die Steuerungseinheit die Konfiguration speichern und beispielsweise einen Strom zur Betätigung des Aktuators gemäß der Konfiguration steuern. Das Ansteuern des Aktuators zur Durchführung der wenigstens einen Automatikfunktion gemäß der Konfiguration betrifft somit eine Ansteuerung des entsprechenden Aktuators durch die Türsteuerungseinrichtung. Der Aktuator kann in dem Fall beispielsweise lediglich als Motor ausgeführt sein und benötigt keinen Controller.

Gemäß einer vorteilhaften Weiterbildung der Erfindung kann vorgesehen sein, dass das Verfahren einen Schritt zum Erfassen einer Annäherung einer Person an die Tür, insbesondere eines Betretens eines Annäherungsbereichs der Tür, umfasst. Das Erfassen einer Annäherung der Person an die Tür kann dazu dienen, den Empfang der Konfigurationsinformation zu starten, beispielsweise indem die Empfangseinrichtung aktiviert wird. Darüber hinaus kann das Erfassen der Annäherung der Person an die Tür zunächst ein Aussenden eines Anforderungssignals mit der Empfangseinheit auslösen, um im Anschluss die Konfigurationsinformation zu empfangen. Dabei ist das Erfassen der Annäherung der Person an die Tür Voraussetzung beispielsweise zum Empfangen der Konfigurationsinformation oder zum Aussenden des Anforderungssignals.

Gemäß einer vorteilhaften Weiterbildung der Erfindung kann vorgesehen sein, dass das Erfassen einer Annäherung einer Person an die Tür ein Erfassen der Annäherung der Person an die Tür basierend auf Sensorinformation einer Annäherungserfassungseinrichtung, insbesondere zur Überwachung des Annäherungsbereichs, umfasst. Entsprechend kann gemäß einer vorteilhaften Weiterbildung der Erfindung vorgesehen sein, dass die Türsteuerungseinrichtung eine Annäherungserfassungseinrichtung, insbesondere mit einem Ultraschallsensor, einem optischen Sensor, insbesondere einer Kamera, einem Funkortungssensor zur Funkortung des der Person zugeordneten Geräts, einem Infrarotsensor oder einem Radarsensor, aufweist zur Erfassung einer Annäherung der Person an die Tür. Das Erfassen einer Annäherung der Person an die Tür kann einerseits dazu dienen, den Empfang der Konfigurationsinformation zu starten, beispielsweise indem die Empfangseinrichtung aktiviert wird. Darüber hinaus kann das Erfassen der Annäherung der Person an die Tür zunächst ein Aussenden eines Anforderungssignals mit der Empfangseinheit auslösen, um im Anschluss die Konfigurationsinformation zu empfangen. Das Erfassen einer Annäherung der Person an die Tür kann zusätzlich dazu dienen, den Aktuator zur Durchführung der wenigstens einen Automatikfunktion gemäß der Konfiguration anzusteuern. Es wird also zunächst die Konfigurationsinformation empfangen, und anschließend abhängig von der Position der Person die Automatikfunktion gestartet, beispielsweise wenn erfasst wird, dass die Person sich innerhalb des Annäherungsbereichs weiter an die Tür angenähert hat.

Gemäß einer vorteilhaften Weiterbildung der Erfindung kann vorgesehen sein, dass das Erfassen einer Annäherung einer Person an die Tür ein Empfangen eines Signals von dem der Person zugeordneten elektronischen Gerät umfasst, insbesondere ein Empfangen der Konfigurationsinformation von dem der Person zugeordneten elektronischen Gerät. Bei der Verwendung eines Kommunikationsstandards mit einer beschränkten Reichweite, wie beispielsweise Kurzreichweiten-Funkstandards wie Bluetooth oder Wireless-LAN, kann die Annäherung der Person mit dem dieser Person zugeordneten elektronischen Gerät dadurch erkannt werden, dass eine Kommunikation ermöglicht wird, weil die Empfangseinrichtung und das der Person zugeordnete elektronische Gerät in Kommunikationsreichweite zueinander sind. Dabei können beispielsweise Mittel wie eine Anpassung der Sendeleistung ergriffen werden, um die Kommunikationsreichweite in gewünschter Weise anzupassen und diese Anpassung für unterschiedliche Umgebungsbedingungen durchführen zu können. Insbesondere wird durch das Empfangen der Konfigurationsinformation von dem der Person zugeordneten elektronischen Gerät sichergestellt, dass die Annäherung eine Person betrifft, die eine entsprechende Konfiguration der Automatikfunktion wünscht, so dass eine Aktivierung durch andere Geräte, die nach demselben Standard kommunizieren können, vermieden wird.

Gemäß einer vorteilhaften Weiterbildung der Erfindung kann vorgesehen sein, dass das Verfahren einen Schritt zum Aussenden eines Anforderungssignals umfasst, um das wenigstens eine der Person zugeordnete elektronische Gerät zum Aussenden der Konfigurationsinformation zu veranlassen. Dadurch kann die Türsteuerungseinrichtung die elektronischen Geräte in dem Annäherungsbereich der Tür zum Übertragen der Konfigurationsinformation an die Türsteuerungseinrichtung veranlassen. Diese Implementierung ist für die elektronischen Geräte besonders vorteilhaft, da sie selber nur bei Bedarf die Konfigurationsinformation verschicken müssen, während sie ansonsten passiv sein können und lediglich ihren Empfänger betreiben müssen. Somit wird der Energieverbrauch dieser Geräte reduziert. Die Türsteuerungseinrichtung ist üblicherweise an eine elektrische Versorgungsleitung angeschlossen, so dass der Energieverbrauch durch das Aussenden des Anforderungssignals unproblematisch ist. Insbesondere erfolgt ein periodisches Aussenden des Anforderungssignals durch die Empfangseinrichtung, so dass sichergestellt ist, dass die elektronischen Geräte nach dem Erreichen des Annäherungsbereichs unmittelbar die Konfigurationsinformation an die Empfangseinrichtung der Türsteuerungseinrichtung übertragen und die Steuerungseinheit den Aktuator entsprechend ansteuern kann.

Gemäß einer vorteilhaften Weiterbildung der Erfindung kann vorgesehen sein, dass das Aussenden eines Anforderungssignals ein Aussenden des Anforderungssignals mit einer Typinformation betreffend eine Art der Automatikfunktion umfasst, und das Empfangen von Konfigurationsinformation von einem einer Person zugeordneten elektronischen Gerät in einem Annäherungsbereich der Tür ein Empfangen von Konfigurationsinformation abhängig von der Typinformation umfasst. Vorzugsweise wird von dem elektronischen Gerät nur die Konfigurationsinformation übertragen, die eine Konfiguration der über die Typinformation identifizierten Automatikfunktion betrifft. Entsprechend kann die Übertragung der Konfigurationsinformation auf solche Information beschränkt sein, die für die vorliegende wenigstens eine Automatikfunktion der Tür relevant ist. Eine Unnötige Übertragung von Konfigurationsinformation wird vermieden. Dies ist besonders vorteilhaft, wenn die Konfigurationsinformation des der Person zugeordneten elektronischen Geräts Information für eine Vielzahl unterschiedlicher Automatikfunktionen aufweist. Die Konfigurationsinformation ist dabei der unterschiedlichen Typinformation zugeordnet. Auch kann die Empfangseinrichtung die empfangene Konfigurationsinformation abhängig von der Art der Automatikfunktion basierend auf der Typinformation filtern.

Gemäß einer vorteilhaften Weiterbildung der Erfindung kann vorgesehen sein, dass das Empfangen von Konfigurationsinformation von einem einer Person zugeordneten elektronischen Gerät in einem Annäherungsbereich der Tür ein Empfangen von Konfigurationsinformation von einer Mehrzahl jeweils einer Person zugeordneten elektronischen Geräten in dem Annäherungsbereich umfasst, und das Konfigurieren der Automatikfunktion basierend auf der empfangenen Konfigurationsinformation ein Bestimmen einer Konfiguration als eine Kombination der Konfigurationsinformation von der Mehrzahl jeweils einer Person zugeordneten elektronischen Geräten in dem Annäherungsbereich umfasst. Gerade in öffentlich zugänglichen Bereichen kann es vorkommen, dass eine große Anzahl von Personen diesen Bereich gleichzeitig oder in kurzer Abfolge betritt, so dass die Konfiguration der wenigstens einen Automatikfunktion nicht immer für jede Person einzeln durchgeführt werden kann, da sonst Überschneidungen bei der Verwendung der Automatikfunktionen auftreten könnten. Beispielsweise kann eine langsame Person den Annäherungsbereich betreten, so dass prinzipiell die Konfiguration der Automatikfunktion durchgeführt werden kann. Allerdings kann die Konfiguration falsch sein, wenn diese langsame Person vor dem Erreichen der Tür von einer anderen Person, für die eine abweichende Konfiguration durchzuführen ist, überholt wird. Durch die Kombination der Konfigurationsinformation der Personen in dem Annäherungsbereich kann eine optimale, kombinierte Konfiguration für diese Personen durchgeführt werden.

Gemäß einer vorteilhaften Weiterbildung der Erfindung kann vorgesehen sein, dass das Bestimmen einer Konfiguration als eine Kombination der Konfigurationsinformation von der Mehrzahl jeweils einer Person zugeordneten elektronischen Geräten in dem Annäherungsbereich ein Bilden eines Mittelwerts von Informationswerten der Konfigurationsinformation umfasst, und/oder das Bestimmen einer Konfiguration als eine Kombination der Konfigurationsinformation von der Mehrzahl jeweils einer Person zugeordneten elektronischen Geräten in dem Annäherungsbereich ein Ermitteln eines Maximalwertes oder eines Minimalwertes von Informationswerten der Konfigurationsinformation umfasst, und/oder das Bestimmen einer Konfiguration als eine Kombination der Konfigurationsinformation von der Mehrzahl jeweils einer Person zugeordneten elektronischen Geräten in dem Annäherungsbereich ein Ermitteln eines Informationswertes der Konfigurationsinformation abhängig von einem weiteren Konfigurationswert umfasst. Die Kombination der Konfigurationsinformation der Personen in dem Annäherungsbereich kann also auf unterschiedliche Weise erfolgen. Das Bilden eines Mittelwerts von Informationswerten der Konfigurationsinformation ermöglicht es, Konfigurationswünsche aller Personen teilweise zu berücksichtigen und diesen entgegenzukommen. Der Mittelwert ist insbesondere bei Informationswerten in Form von Zahlenwerten einfach zu bilden. Allerdings kann auch bei einer diskreten Auswahl den diskreten Werten zusätzlich ein Zahlenwert zugeordnet werden, um einen Mittelwert bilden zu können. Alternativ kann die Kombination der Konfigurationsinformation durchgeführt werden, indem ein Maximalwert oder ein Minimalwert von einzelnen Informationswerten der Konfigurationsinformation bestimmt wird. Somit kann sichergestellt werden, dass die Konfiguration für alle Personen geeignet ist. Beispielsweise bei einer Konfiguration einer Öffnungsgeschwindigkeit der Tür kann ein maximaler Wert gewählt werden, so dass schnelle Personen die Tür jederzeit problemlos passieren können. Bei einer Konfiguration einer Öffnungszeit der Tür kann ebenfalls ein maximaler Wert gewählt werden, so dass langsame Personen die Tür jederzeit problemlos passieren können. In anderen Fällen kann ein weiterer Konfigurationswert betrachtet werden, um den Informationswert zu ermitteln. Der weitere Konfigurationswert gibt beispielsweise eine Priorisierung an für die Konfigurationsinformation für die Person, der ein jeweiliges elektronisches Gerät zugeordnet ist. Der weitere Konfigurationswert gibt insbesondere an, ob die Person körperlichen Einschränkungen unterliegt, so dass die Konfiguration dieser Person zu bevorzugt werden kann.

Gemäß einer vorteilhaften Weiterbildung der Erfindung kann vorgesehen sein, dass das Verfahren einen Schritt zum Übermitteln von Information betreffend eine Einrichtung, zu der die Tür gehört, an das der Person zugeordnete Gerät umfasst, insbesondere einen Plan, Zugänglichkeitsinformation, Verfügbarkeit von Angeboten der Einrichtung, oder ähnliches. Die Information betreffend die Einrichtung kann beispielsweise Kontaktinformation von Personen in der Einrichtung oder Karteninformation der Einrichtung umfassen. Dadurch wird es der Person erleichtert, innerhalb der Einrichtung ihren Weg zu finden. Dies ist besonders vorteilhaft, wenn die Tür eine Zugangstür zu der Einrichtung ist, beispielsweise eine Gebäudeeingangstür oder eine Grundstückzugangstür. Die Information kann über die Empfangseinrichtung von der Türsteuerungseinrichtung an das elektronische Gerät übertragen werden, d.h. über denselben Kommunikationsweg. Alternativ wird die Information über eine andere Kommunikationseinrichtung von der Türsteuerungseinrichtung an das elektronische Gerät übertragen, ohne dass die Empfangseinrichtung der Türsteuerungseinrichtung in ihrem Betrieb beeinträchtigt und ggf. der Empfang der Konfigurationsinformation verhindert wäre.

Gemäß einer vorteilhaften Weiterbildung der Erfindung kann vorgesehen sein, dass das Empfangen von Konfigurationsinformation von einem einer Person zugeordneten elektronischen Gerät in einem Annäherungsbereich der Tür ein Empfangen einer Adressierungsinformation des elektronischen Geräts umfasst, und das Verfahren eine Schritt zum Übermitteln der Adressierungsinformation mit einer Identifikationsinformation der Automatikfunktion und/oder einer Identifikationsinformation der Tür, welche die Automatikfunktion bereitstellt, an einen Server umfasst, um den Server zu veranlassen, basierend auf der Identifikationsinformation der Automatikfunktion Information betreffend eine dazugehörende Einrichtung, insbesondere einen Plan, Zugänglichkeitsinformation, Verfügbarkeit von Angeboten der Einrichtung, oder ähnliches, an das elektronische Gerät mit der übermittelten Adressierungsinformation zu übermitteln. Es wird also eine Übertragung der Information betreffend die Einrichtung von dem Server an das der Person zugeordnete elektronische Gerät initiiert. Die Übertragung der Information liegt dabei im Detail im Bereich des Servers und des der Person zugeordneten elektronischen Geräts. Dabei kann eine prinzipiell beliebige Datenverbindung zwischen dem Server und dem der Person zugeordneten elektronischen Gerät verwendet werden, beispielsweise eine Mobilfunkverbindung nach einem der bekannten Standards GSM, GPRS, UMTS, LTE oder 5G. Dadurch kann eine prinzipiell beliebig große Information in einer beliebigen Weise bereitgestellt werden, ohne dass die Empfangseinrichtung in ihrem Betrieb beeinträchtigt und ggf. der Empfang der Konfigurationsinformation verhindert wäre.

Gemäß einer vorteilhaften Weiterbildung der Erfindung kann vorgesehen sein, dass das Verfahren einen Schritt zum Übermitteln einer Serveradressierungsinformation an das der Person zugeordnete elektronische Gerät umfasst, wobei die Serveradressierungsinformation Information betreffend eine zu der Tür gehörende Einrichtung, insbesondere einen Plan, Zugänglichkeitsinformation, Verfügbarkeit von Angeboten der Einrichtung, oder ähnliches, für das elektronische Gerät verfügbar macht. Das elektronische Gerät kann also verwendet werden, um aktiv eine Übertragung der Information betreffend die Einrichtung von dem Server zu initiieren. Die Übertragung der Information liegt dabei im Detail im Bereich des der Person zugeordneten elektronischen Geräts und des Servers. Dabei kann eine prinzipiell beliebige Datenverbindung zwischen dem Server und dem der Person zugeordneten elektronischen Gerät verwendet werden, beispielsweise eine Mobilfunkverbindung nach einem der bekannten Standards GSM, GPRS, UMTS, LTE oder 5G. Dadurch kann eine prinzipiell beliebig große Information in einer beliebigen Weise bereitgestellt werden, ohne dass die Empfangseinrichtung in ihrem Betrieb beeinträchtigt und ggf. der Empfang der Konfigurationsinformation verhindert wäre.

Gemäß einer vorteilhaften Weiterbildung der Erfindung kann vorgesehen sein, dass das Verfahren nach dem Ansteuern des Aktuators zur Durchführung der wenigstens einen Automatikfunktion gemäß der Konfiguration einen Schritt zum Konfigurieren der Automatikfunktion basierend auf einer voreingestellten Konfigurationsinformation umfasst, insbesondere nach einer erfolgten einmaligen oder mehrmaligen Ansteuerung des Aktuators zur Durchführung der Automatikfunktion und/oder wenn die Person den Annäherungsbereich der Tür verlässt und/oder nach Ablauf eines Timers. Somit kann die individuelle Konfiguration der jeweiligen Automatikfunktion durchgeführt werden, um der entsprechenden Person eine komfortable Benutzung der Tür zu ermöglichen. Um im Anschluss daran eine komfortable Benutzung der Tür für eine beliebige Person zu ermöglichen, insbesondere eine Person, die kein elektronisches Gerät zur Übermittlung von Konfigurationsinformation besitzt, wird für diese Person eine Voreinstellung mit der voreingestellten Konfigurationsinformation hergestellt, die beispielsweise für durchschnittliche Personen vorteilhaft ist. Dabei wird die Konfiguration basierend auf der voreingestellten Konfigurationsinformation hergestellt, wenn beispielsweise die Automatikfunktion betätigt wurde, beispielsweise wenn die Person durch die Tür durchgetreten ist, oder nach einer mehrmaligen Betätigung, beispielsweise abhängig von der Automatikfunktion. Die voreingestellte Konfiguration wird also beispielsweise wieder hergestellt nach einer erfolgten einmaligen oder mehrmaligen Ansteuerung des Aktuators zur Durchführung der Automatikfunktion. Alternativ oder zusätzlich kann die voreingestellte Konfiguration wieder hergestellt werden, wenn die Person den Annäherungsbereich der Tür verlässt und/oder nach Ablauf eines Timers, beispielsweise nach der Durchführung der Konfiguration basierend auf der von dem der Person zugeordneten elektronischen Gerät empfangenen Konfigurationsinformation oder nach der Ansteuerung des Aktuators zur Durchführung der wenigstens einen Automatikfunktion. Das Verlassen des Annäherungsbereichs der Tür kann beispielsweise über eine entsprechende Annäherungserfassungseinrichtung, insbesondere zur Überwachung des Annäherungsbereichs, erfasst werden. Alternativ kann das Verlassen des Annäherungsbereichs der Tür erfasst werden, in dem sich das der Person zugeordnete elektronische Gerät aus dem Annäherungsbereich bewegt, und beispielsweise eine Kommunikationsverbindung zwischen dem der Person zugeordneten elektronischen Gerät und der Empfangseinrichtung abbricht.

Gemäß einer vorteilhaften Weiterbildung der Erfindung kann vorgesehen sein, dass das Verfahren einen Schritt zum Weiterleiten der Konfigurationsinformation zum individuellen Konfigurieren wenigstens einer Automatikfunktion für wenigstens eine weitere Tür umfasst, insbesondere ein Weiterleiten der Konfigurationsinformation zu wenigstens einer nachgelagerten Tür. Dadurch kann die Konfigurationsinformation von Tür zu Tür weitergeleitet werden, ohne dass jeweils eine erneute Abfrage der Automatikfunktion durchgeführt werden muss. Wenn sich eine Mehrzahl Personen im Bereich der weiteren Tür befindet, kann bei Bedarf zusätzlich eine Identifikationsinformation von dem der Person zugeordneten elektronischen Gerät abgefragt werden, so dass die bereits vorab mit derselben Identifikationsinformation übermittelte Konfigurationsinformation für die weitere Tür aktiviert werden kann. Dadurch kann die Konfiguration der wenigstens einen Automatikfunktion schnell durchgeführt werden.

Gemäß einer vorteilhaften Weiterbildung der Erfindung kann vorgesehen sein, dass die Türsteuerungseinrichtung zur elektrischen oder elektronischen Ansteuerung einer Mehrzahl von Aktuatoren zur Durchführung einer Mehrzahl von Automatikfunktionen einer Tür ausgeführt ist, und die Steuerungseinheit ausgeführt ist, eine individuelle Konfiguration der Mehrzahl von Automatikfunktionen jeweils basierend auf einer Teilinformation der empfangenen Konfigurationsinformation durchzuführen, und die Mehrzahl von Aktuatoren zur Durchführung der Mehrzahl von Automatikfunktionen gemäß der Konfiguration basierend auf der Teilinformation anzusteuern. Die Konfigurationsinformation wird dabei vorzugsweise basierend auf einer Typinformation betreffend eine Art der Automatikfunktion entsprechend zugeordnet. Es kann eine einfache Konfiguration einer Mehrzahl von Automatikfunktionen durchgeführt werden.

Weitere Vorteile, Merkmale und Einzelheiten der Erfindung ergeben sich aus der nachfolgenden Beschreibung, in der unter Bezugnahme auf die Zeichnungen Ausführungsbeispiele der Erfindung im Einzelnen beschrieben sind. Dabei können die in den Ansprüchen und in der Beschreibung erwähnten Merkmale jeweils einzeln für sich oder in beliebiger Kombination erfindungswesentlich sein. Es zeigen:
- Fig. 1: eine Darstellung einer Tür mit zwei Türflügeln und zwei Aktoren zum Betätigen der beiden Türflügel zusammen mit einer erfindungsgemäßen Türsteuerungseinrichtung sowie ein elektronisches Gerät und einen Server,
- Fig. 2: eine detaillierte, schematische Darstellung der Türsteuerungseinrichtung aus Fig. 1,
- Fig. 3: ein Ablaufdiagramm eines Verfahrens zum individuellen Konfigurieren einer Automatikfunktion für die Tür aus Figur 1 gemäß einer ersten, bevorzugten Ausführungsform, und
- Fig. 4: ein Ablaufdiagramm eines Verfahrens zum individuellen Konfigurieren einer Automatikfunktion für die Tür aus Figur 1 gemäß einer zweiten Ausführungsform.

In den nachfolgenden Figuren werden für die gleichen technischen Merkmale auch von unterschiedlichen Ausführungsbeispielen die identischen Bezugszeichen verwendet.

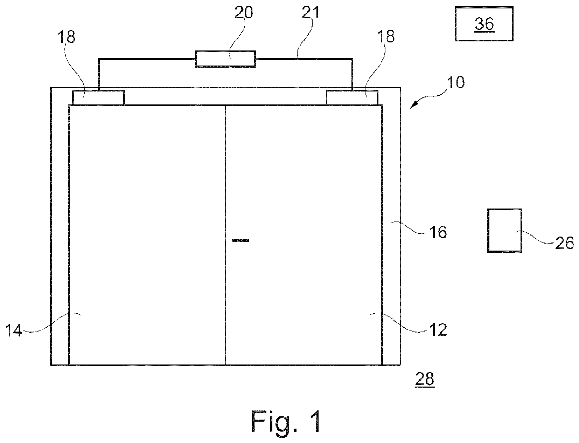

In Figur 1 ist schematisch eine Tür 10 dargestellt. Die Tür 10 ist hier beispielhaft als Zugangstür eines öffentlich zugänglichen Bereichs verwendet.

Die Tür 10 umfasst einen Gangflügel 12 und einen Standflügel 14, die beide an einer Türzarge 16 verschwenkbar gehalten sind.

Der Standflügel 12 und der Gangflügel 14 sind jeweils über einen Aktuator 18 mit der Türzarge 16 verbunden. Die Aktuatoren 18 sind in diesem Ausführungsbeispiel Antriebe zum Öffnen und/oder Schließen des jeweiligen Türflügels 12, 14. Die Aktuatoren 18 sind im Detail als mechanische, elektrische, elektromechanische oder elektrohydraulische Antriebe ausgeführt, so dass der jeweilige Türflügel 12, 14 mittels mechanischer, elektrischer, elektromechanischer oder elektrohydraulischer Hilfskraft geöffnet und/oder geschlossen werden kann. Die Aktuatoren 18 können auf hier nicht dargestellter Weise jeweils an eine elektrische Versorgungsleitung angeschlossen sein. Alternativ können die Aktuatoren durch einen oder mehrere Energiespeicher mit Energie versorgt werden.

Der Tür 10 ist eine Türsteuerungseinrichtung 20 zugeordnet, die in diesem Ausführungsbeispiel in einem Bereich oberhalb der Türzarge 16 angeordnet ist. In einem anderen Ausführungsbeispiel kann die Türsteuerungseinrichtung 20 beispielsweise an oder in der Türzarge 16 angebracht sein. Die Türsteuerungseinrichtung 20 ist elektrisch über eine Verbindungsleitung 21, alternativ auch drahtlos, mit den beiden Aktuatoren 18 verbunden. Alternativ kann die Türsteuerungseinrichtung 20 auch an oder in wenigstens einem der Aktuatoren 18 angeordnet sein.

Die Türsteuerungseinrichtung 20 ist ausgeführt zur elektrischen oder elektronischen Ansteuerung der Aktuatoren 18 zum Öffnen und/oder Schließen der beiden Türflügel 12, 14 der Tür 10. Dadurch wird eine Automatikfunktion zum Öffnen und/oder Schließen der Tür 10 bereitgestellt.

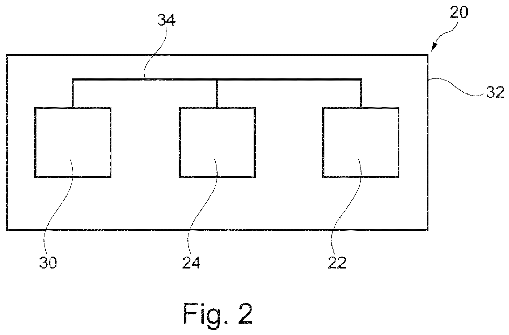

Figur 2 zeigt die Türsteuerungseinrichtung 20 im Detail. Die Türsteuerungseinrichtung 20 umfasst eine Steuerungseinheit 22 und eine Empfangseinrichtung 24 zum Empfangen von Konfigurationsinformation von einem einer Person zugeordneten elektronischen Gerät 26 in einem Annäherungsbereich 28 der Tür 10, wie beispielhaft in Figur 1 dargestellt ist. Die Steuerungseinheit 22 ist eine prinzipiell beliebige Datenverarbeitungseinheit, insbesondere ein Controller, besonders bevorzugt ein Embedded Controller. Die Empfangseinrichtung 24 ist zur bi-direktionalen Kommunikation mit dem elektronischen Gerät 26 ausgeführt. Die Empfangseinrichtung 24 und das elektronische Gerät 26 sind zur Kommunikation nach einem Kurzreichweitenfunkstandard ausgeführt, in diesem Ausführungsbeispiel nach dem Bluetooth Standard.

Die Türsteuerungseinrichtung 20 umfasst außerdem eine Annäherungserfassungseinrichtung 30, die in diesem Ausführungsbeispiel als Ultraschallsensor ausgeführt ist. In einer alternativen Ausführungsform ist die Annäherungserfassungseinrichtung 30 nach der Art eines Bewegungssensors, eines optischen Sensors, insbesondere einer Kamera, eines Funkortungssensors zur Ortung des elektrischen Geräts 26, eines Infrarotsensors oder eines Radarsensors ausgeführt.

Die Empfangseinrichtung 24 und die Annäherungserfassungseinrichtung 30 sind über eine Datenschnittstelle 34 mit der Steuerungseinheit 22 verbunden.

Die Türsteuerungseinrichtung 20 umfasst ein Gehäuse 32, in dem die Steuerungseinheit 22, Empfangseinrichtung 24 und die Annäherungserfassungseinrichtung 30 gemeinsam angeordnet sind. Die Türsteuerungseinrichtung 20 ist auf hier nicht dargestellte Weise an eine elektrische Versorgungsleitung angeschlossen. In einer alternativen Ausführungsform ist die Türsteuerungseinrichtung 20 integral mit der Automatikfunktion ausgeführt, d.h. einer der Aktuatoren 18 oder beide sind in einem gemeinsamen Gehäuse 32 der Türsteuerungseinrichtung 20 angeordnet.

Das elektronische Gerät 26 ist ein mobiles Gerät und als solches einem Träger, typischerweise einer Person, zugeordnet. Das elektronische Gerät 26 ist hier beispielhaft ein Mobiltelefon, das von der Person mitgeführt wird. Das elektronische Gerät 26 ist zur Kommunikation nach dem Bluetooth Standard ausgeführt und kann somit mit der Empfangseinrichtung 24 drahtlos kommunizieren.

In dem elektronischen Gerät 26 ist Konfigurationsinformation lokal gespeichert. Die Konfigurationsinformation kann vorzugsweise von der Person selbst angepasst werden, indem sie in dem elektronischen Gerät 26 bearbeitet wird. Dazu kann auf dem der Person zugeordneten elektronischen Gerät 26 eine entsprechende Software beispielsweise als App installiert sein.

Die Konfigurationsinformation ist eine der Person zugeordnete Information, die Vorlieben oder besondere Anforderungen an die Automatikfunktion der Tür 10 widergibt, beispielsweise eine Annäherungsgeschwindigkeit, eine Durchquerungszeit, eine Verwendung von Rampen oder ein Absenken einer Schwelle. Die Konfigurationsinformation ist eine allgemeine Information zur Konfiguration prinzipiell beliebiger Türen 10 an prinzipiell beliebigen Orten, d.h. die Automatikfunktion ist nicht an bestimmte Türen 10 gebunden.

Die Konfigurationsinformation bewirkt eine individuelle Konfiguration für die Person, die das elektronische Gerät 26 mitführt. Die Wirkung der individuellen Konfiguration kann für ein einmaliges/mehrmaliges Ansteuern des Aktuators 18 zur Durchführung der wenigstens einen Automatikfunktion ausgeführt sein, oder bis die Person den Annäherungsbereich 28 wieder verlässt bzw. sich von der Tür 10 entfernt.

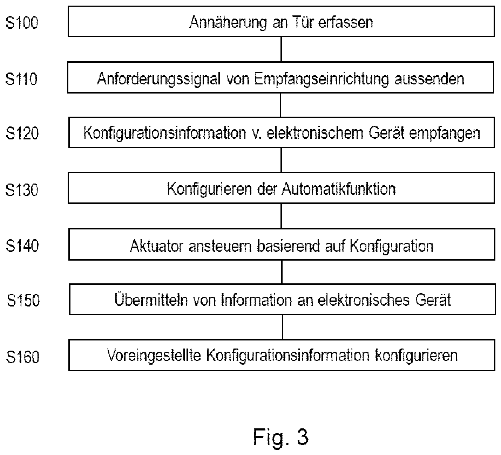

Nachstehend wird ein erstes Ausführungsbeispiel eines Verfahrens zum individuellen Konfigurieren der Automatikfunktion der Tür 10 zum Öffnen und/oder Schließen des Gangflügels 12 beschrieben. Das Verfahren wird mit der oben beschriebenen Türsteuerungseinrichtung 20 durchgeführt und unter Bezug auf das Ablaufdiagramm der Figur 3 beschrieben.

Das Verfahren beginnt mit Schritt S100, der ein Erfassen einer Annäherung einer Person an die Tür 10, insbesondere eines Betretens des Annäherungsbereichs 28 der Tür 10, umfasst. Das Erfassen einer Annäherung der Person an die Tür 10 aktiviert die Empfangseinrichtung 24, um die Konfigurationsinformation von dem elektronischen Gerät 26 zu empfangen, wie nachstehend im Detail ausgeführt ist.

Die Annäherung der Person wird mit der Annäherungserfassungseinrichtung 30 durchgeführt, die Ultraschallsignale aussendet und Bewegungen in dem Annäherungsbereich 28 aus Ultraschallechos, die von der Person als Antwort auf die von der Annäherungserfassungseinrichtung 30 ausgesendeten Ultraschallpulse erzeugt werden, erkennt. Die Ultraschallechos stellen dabei Sensorinformation der Annäherungserfassungseinrichtung 30 dar.

Sobald die Annäherung einer Person erkannt wurde, wird über die Datenschnittstelle 34 ein entsprechendes Signal an die Steuerungseinheit 22 gesendet.

Schritt S110 betrifft ein Aussenden eines Anforderungssignals von der Empfangseinrichtung 24. Die Steuerungseinheit 22 sendet ein entsprechendes Signal über die Datenschnittstelle 34 an die Empfangseinrichtung 24, welches das Aussenden des Anforderungssignals initiiert.

Das Aussenden des Anforderungssignals erfolgt mit einer Typinformation betreffend eine Art der Automatikfunktion der Tür 10. Das Anforderungssignal wird durch die Empfangseinrichtung 24 nach der Aktivierung in Schritt S100 periodisch ausgesendet.

Das Anforderungssignal veranlasst das in dem Annäherungsbereich 28 befindliche elektronisch Gerät 26 zum Aussenden der gespeicherten Konfigurationsinformation zur Übermittlung an die Empfangseinrichtung 24. Dabei wird nur die Konfigurationsinformation übertragen, die eine Konfiguration der über die Typinformation identifizierten Automatikfunktion betrifft. Die Konfigurationsinformation des elektronischen Geräts 26 ist dabei unterschiedlicher Typinformation zugeordnet.

Schritt S120 betrifft ein Empfangen der Konfigurationsinformation von dem elektronischen Gerät 26 mit der Empfangseinrichtung 24. In Übereinstimmung mit von dem elektronischen Gerät 26 übertragenen Konfigurationsinformation, welche die Konfiguration der über die Typinformation identifizierten Automatikfunktion betrifft, wird diese Konfigurationsinformation von der Empfangseinrichtung 24 empfangen und über die Datenschnittstelle 34 an die Steuerungseinheit 22 weitergeleitet.

Das Empfangen der Konfigurationsinformation von dem elektronischen Gerät 26 beendet außerdem das periodische Aussenden des Anforderungssignals durch die Empfangseinrichtung 24.

Schritt S130 betrifft ein Konfigurieren der Automatikfunktion basierend auf der empfangenen Konfigurationsinformation. In dem vorliegenden Ausführungsbeispiel wird die Konfiguration durchgeführt, indem der Teil der Konfigurationsinformation, der die entsprechende Automatikfunktion betrifft, als Konfiguration für den Aktuator 18 des aktiven Türflügels 12 übernommen wird.

Schritt S140 betrifft das Ansteuern des Aktuators zur Durchführung der Automatikfunktion gemäß der Konfiguration. Die Konfigurationsinformation, welche die Basis für die Konfiguration des Aktuators 18 ist, wird über die Verbindungsleitung 21 an den Aktuator 18 übertragen. Der Aktuator 18 kann dann bei einer Betätigung selbständig die Automatikfunktion basierend auf der übertragenen Konfigurationsinformation durchführen. Dazu kann dem Aktuator 18 ein weiterer Sensor zugeordnet sein, der den Aktuator 18 zur Betätigung der Automatikfunktion betätigt. Alternativ wird der Aktuator 18 beispielsweise durch die Übertragung der Konfigurationsinformation unmittelbar betätigt.

Schritt S150 betrifft ein Übermitteln von Information betreffend eine Einrichtung, zu der die Tür 10 gehört, an das elektronische Gerät 26. Die Information umfasst beispielsweise einen Plan, Zugänglichkeitsinformation, Verfügbarkeit von Angeboten der Einrichtung, oder ähnliches. Die Information wird in diesem Ausführungsbeispiel unmittelbar von der Empfangseinrichtung 24 der Türsteuerungseinrichtung 20 an das elektronische Gerät 26 übertragen.

Schritt S150 kann prinzipiell unabhängig von den vorherigen Schritten erfolgen, beispielsweise bereits unmittelbar im Anschluss an Schritt S120 oder zu einem beliebigen nachfolgenden Zeitpunkt.

Anstatt in Schritt S150 die Information unmittelbar von der Türsteuerungseinrichtung 20 an das entsprechende elektronische Gerät 26 zu übermitteln, kann alternativ vorgesehen sein, dass die Türsteuerungseinrichtung 20 eine Serveradressierungsinformation an das der Person zugeordnete elektronische Gerät 26 überträgt, wobei die Serveradressierungsinformation die Information betreffend die zu der Tür 10 gehörende Einrichtung, wie oben ausgeführt, für das elektronische Gerät 26 verfügbar macht. Die Serveradressierungsinformation kann beispielsweise nach der Art einer Internetadresse (URL) ausgeführt sein. Das elektronische Gerät 26 kann die Serveradressierungsinformation aktiv verwenden, um eine Übertragung der Information betreffend die Einrichtung von einem Server 36 zu initiieren. Dabei kann eine prinzipiell beliebige Datenverbindung zwischen dem Server 36 und dem elektronischen Gerät 26 verwendet werden, beispielsweise eine Mobilfunkverbindung nach einem der bekannten Standards GSM, GPRS, UMTS, LTE oder 5G abhängig von der Ausgestaltung des elektronischen Geräts 26.

Anstatt in Schritt S150 die Information unmittelbar von der Türsteuerungseinrichtung 20 an das elektronische Gerät 26 zu übermitteln, kann in einer alternativen Ausführungsform die Information betreffend die zu der Tür 10 gehörende Einrichtung unmittelbar von dem Server 36 an das elektronische Gerät 26 übertragen wird. Dazu ist lediglich erforderlich, dass das elektronische Gerät auf den Empfang der Anforderungsnachricht in Schritt S110 mit seiner Konfigurationsinformation Adressierungsinformation aussendet, die von der Türsteuerungseinrichtung 20 empfangen wird, wenn sich das elektronische Gerät im Annäherungsbereich 28 der Tür 10 befindet. Die Türsteuerungseinrichtung 20 extrahiert die Adressierungsinformation aus der Konfigurationsinformation und übermittelt sie zusammen mit einer Identifikationsinformation der Tür 10, welche die Automatikfunktion bereitstellt, an den Server 36. Der Server 36 wird durch den Empfang dieser Information veranlasst, eine Übertragung der Information an das elektronische Gerät 26 mit der übermittelten Adressierungsinformation durchzuführen. Auch hierbei kann eine prinzipiell beliebige Datenverbindung zwischen dem Server 36 und dem elektronischen Gerät 26 verwendet werden, beispielsweise eine Mobilfunkverbindung nach einem der bekannten Standards GSM, GPRS, UMTS, LTE oder 5G.

Schritt S160 betrifft ein Konfigurieren der Automatikfunktion basierend auf einer voreingestellten Konfigurationsinformation nach einer erfolgten einmaligen Ansteuerung des Aktuators 18 zur Durchführung der Automatikfunktion. Dies wird durch den Ablauf eines Timers angenähert. Der Timer wird in Schritt S140 gestartet.

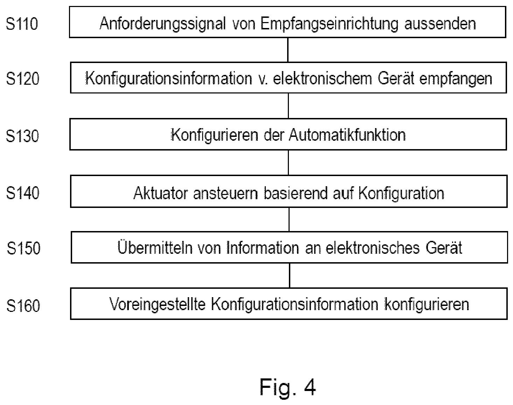

Nachstehend wird ein zweites Ausführungsbeispiel eines Verfahrens zum individuellen Konfigurieren der Automatikfunktion der Tür 10 zum Öffnen und/oder Schließen des aktiven Türflügels 12 beschrieben. Das Verfahren wird ebenfalls mit der oben beschriebenen Türsteuerungseinrichtung 20 durchgeführt und unter Bezug auf das Ablaufdiagramm der Figur 4 beschrieben. Dabei werden ähnliche oder identische Schritte nur soweit im Detail erläutert, wie sie von dem Verfahren des ersten Ausführungsbeispiels abweichen. Nicht angegebene Details entsprechen im Zweifel denen des Verfahrens des ersten Ausführungsbeispiels.

Das Verfahren des zweiten Ausführungsbeispiels beginnt mit Schritt S110. Gemäß Schritt S110 erfolgt ein periodisches Aussenden des Anforderungssignals von der Empfangseinrichtung 24.

Das Aussenden des Anforderungssignals erfolgt wie für das Verfahren des ersten Ausführungsbeispiels beschrieben mit einer Typinformation betreffend eine Art der Automatikfunktion der Tür 10.

Das Anforderungssignal veranlasst in dem Annäherungsbereich 28 befindliche elektronische Geräte 26 zum Aussenden ihrer gespeicherten Konfigurationsinformation zur Übermittlung an die Empfangseinrichtung 24. Dabei wird jeweils nur die Konfigurationsinformation übertragen, die eine Konfiguration der über die Typinformation identifizierten Automatikfunktion betrifft. Die Konfigurationsinformation jedes elektronischen Geräts 26 ist dabei der unterschiedlichen Typinformation zugeordnet.

Schritt S120 betrifft ein Empfangen der Konfigurationsinformation von jedem elektronischen Gerät 26 mit der Empfangseinrichtung 24. Die Konfigurationsinformation wird von der Empfangseinrichtung 24 empfangen und über die Datenschnittstelle 34 an die Steuerungseinheit 22 weitergeleitet.

In dem zweiten Ausführungsbeispiel wird das periodische Aussenden des Anforderungssignals durch die Empfangseinrichtung 24 nicht beendet, sondern fortgesetzt.

Schritt S130 betrifft ein Konfigurieren der Automatikfunktion basierend auf der empfangenen Konfigurationsinformation. In dem vorliegenden Ausführungsbeispiel wird die Konfiguration durchgeführt, indem der Teil der Konfigurationsinformation, der die entsprechende Automatikfunktion betrifft, als Konfiguration für den Aktuator 18 des Gangflügels 12 übernommen wird.

Sobald eine Konfigurationsinformation von einem weiteren elektronischen Gerät 26 empfangen wird, erfolgt eine Kombination der Konfigurationsinformation der Personen in dem Annäherungsbereich 28, d.h. es erfolgt eine Kombination der Konfigurationsinformation von den elektronischen Geräten 26, die den entsprechenden Personen zugeordnet sind und von diesen mitgeführt werden. Sobald eine Person bzw. das von ihr mitgeführte elektronische Gerät 26 den Annäherungsbereich 28 verlässt, wird die entsprechende Konfigurationsinformation nicht mehr berücksichtigt, so dass ggf. keine Kombination der Konfigurationsinformation mehr erforderlich ist. Das Verlassen des Annäherungsbereichs 28 kann beispielsweise durch einen Ablauf eines Timers, der beim Empfang jeder Konfigurationsinformation gestartet wird und dieser Konfigurationsinformation zugeordnet ist, angenähert werden.

Beispielsweise kann die Kombination der Konfigurationsinformation von der Mehrzahl elektronischer Geräten 26 ein Bilden eines Mittelwerts von Informationswerten der Konfigurationsinformation umfassen, indem beispielsweise aus einzelnen Informationswerten für eine gewünschte Öffnungsgeschwindigkeit der Tür 10 eine mittlere Öffnungsgeschwindigkeit bestimmt und als Konfigurationswert verwendet wird.

Alternativ kann als Konfigurationswert ein Maximalwert oder ein Minimalwert von einzelnen Informationswerten der Konfigurationsinformation bestimmt werden. Dadurch kann beispielsweise aus einzelnen Informationswerten für eine gewünschte Öffnungsgeschwindigkeit der Tür 10 eine maximale oder minimale Öffnungsgeschwindigkeit bestimmt und als Konfigurationswert verwendet werden.

Weiter alternativ kann als Konfigurationswert ein Informationswert abhängig von einem weiteren Konfigurationswert bestimmt werden. Der weitere Konfigurationswert gibt beispielsweise eine Priorisierung an für die Konfigurationsinformation eines elektronischen Geräts 26, insbesondere ob die Person, die das entsprechende elektronische Gerät 26 mitführt, körperlichen Einschränkungen unterliegt, so dass deren Konfigurationsinformation zu bevorzugen ist.

Schritt S140 betrifft das Ansteuern des Aktuators 18 zur Durchführung der Automatikfunktion gemäß der Konfiguration. Die Konfiguration entspricht dabei der Konfigurationsinformation eines einzelnen elektronischen Geräts 26 oder einer kombinierten Konfigurationsinformation, die wie oben angegeben ermittelt wurde. Die entsprechende Konfigurationsinformation wird über die Verbindungsleitung 21 an den Aktuator 18 übertragen. Der Aktuator 18 kann dann selbständig die Automatikfunktion basierend auf der übertragenen Konfigurationsinformation durchführen. Dazu kann dem Aktuator 18 ein weiterer Sensor zugeordnet sein, der den Aktuator 18 zur Durchführung der Automatikfunktion betätigt.

Das Übertragen der Konfigurationsinformation an den Aktuator 18 erfolgt dabei jedes Mal, wenn sich die Konfiguration ändert, d.h. wenn eine Person mit einem elektronischen Gerät 26 den Annäherungsbereich 28 betritt oder verlässt.

Schritt S150 betrifft ein Übermitteln von Information betreffend eine Einrichtung, zu der die Tür 10 gehört, an das elektronische Gerät 26, wie oben beschrieben.

Schritt S160 betrifft ein Konfigurieren der Automatikfunktion basierend auf einer voreingestellten Konfigurationsinformation, wie oben in Bezug auf das Verfahren des ersten Ausführungsbeispiels beschrieben.

Die voranstehende Erläuterung der Ausführungsformen beschreibt die vorliegende Erfindung ausschließlich im Rahmen von Beispielen. Selbstverständlich können einzelne Merkmale der Ausführungsformen, sofern technisch sinnvoll, frei miteinander kombiniert werden, ohne den Rahmen der vorliegenden Erfindung zu verlassen.

### Bezugszeichenliste

- 10: Tür
- 12: Gangflügel
- 14: Standflügel
- 16: Türzarge
- 18: Aktuator
- 20: Türsteuerungseinrichtung
- 21: Verbindungsleitung
- 22: Steuerungseinheit
- 24: Empfangseinrichtung
- 26: elektronisches Gerät
- 28: Annäherungsbereich
- 30: Annäherungserfassungseinrichtung
- 32: Gehäuse
- 34: Datenschnittstelle
- 36: Server

## Patentansprüche

1. Verfahren zum individuellen Konfigurieren wenigstens einer Automatikfunktion für eine Tür (10), insbesondere in einem öffentlich zugänglichen Bereich, mit wenigstens einem elektrisch oder elektronisch ansteuerbaren Aktuator (18) zur Durchführung der Automatikfunktion, umfassend die Schritte
Empfangen von Konfigurationsinformation von einem einer Person zugeordneten elektronischen Gerät (26) in einem Annäherungsbereich der Tür (10),
Konfigurieren der Automatikfunktion basierend auf der empfangenen Konfigurationsinformation, und
Ansteuern des Aktuators (18) zur Durchführung der wenigstens einen Automatikfunktion gemäß der Konfiguration.

2. Verfahren nach Anspruch 1,
**dadurch gekennzeichnet, dass**
das Verfahren einen Schritt zum Erfassen einer Annäherung einer Person an die Tür (10), insbesondere eines Betretens eines Annäherungsbereichs (28) der Tür (10), umfasst.

3. Verfahren nach Anspruch 2,
**dadurch gekennzeichnet, dass**
das Erfassen einer Annäherung einer Person an die Tür (10) ein Erfassen der Annäherung der Person an die Tür (10) basierend auf Sensorinformation einer Annäherungserfassungseinrichtung (30), insbesondere zur Überwachung des Annäherungsbereichs (28), umfasst.

4. Verfahren nach Anspruch 2 oder 3,
**dadurch gekennzeichnet, dass**
das Erfassen einer Annäherung einer Person an die Tür (10) ein Empfangen eines Signals von dem der Person zugeordneten elektronischen Gerät (26) umfasst, insbesondere ein Empfangen der Konfigurationsinformation von dem der Person zugeordneten elektronischen Gerät (26).

5. Verfahren nach einem der vorhergehenden Ansprüche,
**dadurch gekennzeichnet, dass**
das Verfahren einen Schritt zum Aussenden eines Anforderungssignals umfasst, um das wenigstens eine der Person zugeordnete elektronische Gerät (26) zum Aussenden der Konfigurationsinformation zu veranlassen.

6. Verfahren nach Anspruch 5,
**dadurch gekennzeichnet, dass**
das Aussenden eines Anforderungssignals ein Aussenden des Anforderungssignals mit einer Typinformation betreffend eine Art der Automatikfunktion umfasst, und
das Empfangen von Konfigurationsinformation von einem einer Person zugeordneten elektronischen Gerät (26) in einem Annäherungsbereich (28) der Tür (10) ein Empfangen von Konfigurationsinformation abhängig von der Typinformation umfasst.

7. Verfahren nach einem der vorhergehenden Ansprüche,
**dadurch gekennzeichnet, dass**
das Empfangen von Konfigurationsinformation von einem einer Person zugeordneten elektronischen Gerät (26) in einem Annäherungsbereich (28) der Tür (10) ein Empfangen von Konfigurationsinformation von einer Mehrzahl jeweils einer Person zugeordneten elektronischen Geräten (26) in dem Annäherungsbereich (28) umfasst, und
das Konfigurieren der Automatikfunktion basierend auf der empfangenen Konfigurationsinformation ein Bestimmen einer Konfiguration als eine Kombination der Konfigurationsinformation von der Mehrzahl jeweils einer Person zugeordneten elektronischen Geräten (26) in dem Annäherungsbereich (28) umfasst.

8. Verfahren nach Anspruch 7,
**dadurch gekennzeichnet, dass**
das Bestimmen einer Konfiguration als eine Kombination der Konfigurationsinformation von der Mehrzahl jeweils einer Person zugeordneten elektronischen Geräten (26) in dem Annäherungsbereich (28) ein Bilden eines Mittelwerts von Informationswerten der Konfigurationsinformation umfasst, und/oder
das Bestimmen einer Konfiguration als eine Kombination der Konfigurationsinformation von der Mehrzahl jeweils einer Person zugeordneten elektronischen Geräten (26) in dem Annäherungsbereich (28) ein Ermitteln eines Maximalwertes oder eines Minimalwertes von Informationswerten der Konfigurationsinformation umfasst, und/oder
das Bestimmen einer Konfiguration als eine Kombination der Konfigurationsinformation von der Mehrzahl jeweils einer Person zugeordneten elektronischen Geräten (26) in dem Annäherungsbereich (28) ein Ermitteln eines Informationswertes der Konfigurationsinformation abhängig von einem weiteren Konfigurationswert umfasst.

9. Verfahren nach einem der vorhergehenden Ansprüche,
**dadurch gekennzeichnet, dass**
das Verfahren einen Schritt zum Übermitteln von Information betreffend eine Einrichtung, zu der die Tür (10) gehört, an das der Person zugeordnete Gerät (26) umfasst, insbesondere einen Plan, Zugänglichkeitsinformation, Verfügbarkeit von Angeboten der Einrichtung, oder ähnliches.

10. Verfahren nach einem der vorhergehenden Ansprüche,
**dadurch gekennzeichnet, dass**
das Empfangen von Konfigurationsinformation von einem einer Person zugeordneten elektronischen Gerät (26) in einem Annäherungsbereich (28) der Tür (10) ein Empfangen einer Adressierungsinformation des elektronischen Geräts (26) umfasst, und
das Verfahren einen Schritt zum Übermitteln der Adressierungsinformation mit einer Identifikationsinformation der Automatikfunktion und/oder einer Identifikationsinformation der Tür (10), welche die Automatikfunktion bereitstellt, an einen Server (36) umfasst, um den Server (36) zu veranlassen, basierend auf der Identifikationsinformation der Automatikfunktion Information betreffend eine dazugehörende Einrichtung, insbesondere einen Plan, Zugänglichkeitsinformation, Verfügbarkeit von Angeboten der Einrichtung, oder ähnliches, an das elektronische Gerät (26) mit der übermittelten Adressierungsinformation zu übermitteln.

11. Verfahren nach einem der vorhergehenden Ansprüche,
**dadurch gekennzeichnet, dass**
das Verfahren nach dem Ansteuern des Aktuators (18) zur Durchführung der wenigstens einen Automatikfunktion gemäß der Konfiguration einen Schritt zum Konfigurieren der Automatikfunktion basierend auf einer voreingestellten Konfigurationsinformation umfasst, insbesondere nach einer erfolgten einmaligen oder mehrmaligen Ansteuerung des Aktuators (18) zur Durchführung der Automatikfunktion und/oder wenn die Person den Annäherungsbereich (28) der Tür (10) verlässt und/oder nach Ablauf eines Timers.

12. Verfahren nach einem der vorhergehenden Ansprüche,
**dadurch gekennzeichnet, dass**
das Verfahren einen Schritt zum Weiterleiten der Konfigurationsinformation zum individuellen Konfigurieren wenigstens einer Automatikfunktion für wenigstens eine weitere Tür (10) umfasst, insbesondere ein Weiterleiten der Konfigurationsinformation zu wenigstens einer nachgelagerten Tür (10).

13. Türsteuerungseinrichtung (20) zur elektrischen oder elektronischen Ansteuerung wenigstens eines Aktuators (18) zur Durchführung wenigstens einer Automatikfunktion einer Tür (10), insbesondere in einem öffentlich zugänglichen Bereich, mit
einer Steuerungseinheit (22), und
einer Empfangseinrichtung (24) zum Empfangen von Konfigurationsinformation von einem einer Person zugeordneten elektronischen Gerät (26) in einem Annäherungsbereich (28) der Tür (10), wobei
die Steuerungseinheit (22) zur Ansteuerung des wenigstens einen elektrisch oder elektronisch ansteuerbaren Aktuators (18) ausgeführt ist, und
die Steuerungseinheit (22) ausgeführt ist, eine individuelle Konfiguration der wenigstens einen Automatikfunktion basierend auf der empfangenen Konfigurationsinformation durchzuführen, und den wenigstens einen Aktuator (18) zur Durchführung der Automatikfunktion gemäß der Konfiguration anzusteuern.

14. Türsteuerungseinrichtung (20) nach Anspruch 13,
**dadurch gekennzeichnet, dass**
die Türsteuerungseinrichtung eine Annäherungserfassungseinrichtung (30), insbesondere mit einem Ultraschallsensor, einem optischen Sensor, insbesondere einer Kamera, einem Funkortungssensor zur Ortung des der Person zugeordneten Geräts (26), einem Infrarotsensor oder einem Radarsensor, aufweist zur Erfassung einer Annäherung der Person an die Tür (10).

15. Türsteuerungseinrichtung (20) nach Anspruch 13 oder 14,
**dadurch gekennzeichnet, dass**
die Türsteuerungseinrichtung (20) zur elektrischen oder elektronischen Ansteuerung einer Mehrzahl von Aktuatoren (18) zur Durchführung einer Mehrzahl von Automatikfunktionen einer Tür (10) ausgeführt ist, und
die Steuerungseinheit (22) ausgeführt ist, eine individuelle Konfiguration der Mehrzahl von Automatikfunktionen jeweils basierend auf einer Teilinformation der empfangenen Konfigurationsinformation durchzuführen, und die Mehrzahl von Aktuatoren (18) zur Durchführung der Mehrzahl von Automatikfunktionen gemäß der Konfiguration basierend auf der Teilinformation anzusteuern.
